# EUROPÄISCHE PATENTANMELDUNG

(11) **EP 1 988 379 A2**
(43) Veröffentlichungstag der Anmeldung: **05.11.2008**
(21) Anmeldenummer: 08001996.1
(22) Anmeldetag: 02.02.2008
(51) Int. Cl.: G01M 17/007, G01M 3/24

(54) **Vorrichtung und Verfahren zur Prüfung von Umströmungsgeräuschen**

(30) Priorität: 04.05.2007 DE 102007020878
(71) Anmelder: Dr. Ing. h.c. F. Porsche Aktiengesellschaft, 70435 Stuttgart (DE)
(72) Erfinder: Ochs, Jürgen, 71297 Moensheim (DE)

(57) **Zusammenfassung**

Die Erfindung betrifft eine Vorrichtung zur Prüfung von Umströmungsgeräuschen eines Kraftfahrzeugs (5), wobei die Vorrichtung eine Blasdüseneinrichtung mit wenigstens einer Blasdüse (1, 2, 3) und einer Transporteinrichtung aufweist, wobei die Blasdüseneinrichtung zur gezielten Beaufschlagung der Außenhaut des Kraftfahrzeugs (5) mit Luftströmungen ausgebildet ist, und wobei die Transporteinrichtung derart ausgebildet ist, dass die Blasdüseneinrichtung und das Kraftfahrzeug (5) relativ zueinander bewegt werden können, wobei ein Mikrofonarray vorgesehen ist, welches zur Anordnung im Innenraum des Kraftfahrzeugs (5) und zur Messung der Umströmungsgeräusche im Innenraum des Kraftfahrzeugs (5) ausgebildet ist. Vorzugsweise ist das Mikrofonarray (11) als Kugelarray ausgebildet. Die Erfindung betrifft auch ein entsprechendes Verfahren, wobei die durch die Luftströmungen verursachten Umströmungsgeräusche im Innenraum des Kraftfahrzeugs (5) unter Verwendung eines Mikrofonarrays (11) gemessen werden.

## Beschreibung

Die Erfindung betrifft eine Vorrichtung zur Prüfung von Umströmungsgeräuschen eines Kraftfahrzeugs, wobei die Vorrichtung eine Blasdüseneinrichtung mit wenigstens einer Blasdüse und eine Transporteinrichtung aufweist, wobei die Blasdüseneinrichtung zur gezielten Beaufschlagung der Außenhaut des Kraftfahrzeugs mit Luftströmungen ausgebildet ist, und wobei die Transporteinrichtung derart ausgebildet ist, dass die Blasdüseneinrichtung und das Kraftfahrzeug relativ zueinander bewegt werden können. Die Erfindung betrifft auch ein entsprechendes Verfahren zur Prüfung von Umströmungsgeräuschen eines Kraftfahrzeugs.

Die deutsche Gebrauchsmusterschrift DE 203 20 885 U1 beschreibt eine Vorrichtung der eingangs genannten Art, wobei die Vorrichtung nach Art eines Prüfstands ausgebildet ist und die wenigstens eine Blasdüse umfassende Blasdüseneinrichtung an Bereichen der Außenhaut des Aufbaus eines Personenkraftwagens mittels einer Transporteinrichtung vorbeiführbar ist. Nachteilig ist bei der bekannten Vorrichtung, dass die Prüfergebnisse nicht auf objektiven Messungen basieren, sondern auf dem subjektiven Eindruck des Prüfpersonals, was zu unvermeidbaren Streuungen führt. Der Messvorgang bei der bekannten Vorrichtung ist nicht hinreichend zuverlässig reproduzierbar.

Es ist Aufgabe der Erfindung, eine Vorrichtung und ein Verfahren zur Prüfung von Umströmungsgeräuschen eines Kraftfahrzeugs, insbesondere eines Personenkraftwagens, bereitzustellen, wobei die Nachteile des Stands der Technik vermieden werden und die Messung von Umströmungsgeräuschen, die durch die Beaufschlagung der Außenhaut des Kraftfahrzeugs mit Luftströmungen hervorgerufen werden, besonders präzise, zuverlässig und objektiv erfolgt.

Erfindungsgemäß wird diese Aufgabe gelöst durch eine Vorrichtung gemäß Patentanspruch 1. Erfindungsgemäß wird die Aufgabe auch gelöst durch ein Verfahren gemäß Patentanspruch 10. Vorteilhafte Weiterbildungen der Erfindung sind Gegenstand der abhängigen Patentansprüche.

Die mit der Erfindung hauptsächlich erzielten Vorteile sind darin zu sehen, dass eine vom subjektiven Eindruck eines Beurteilers unabhängige, objektive Fehlerquellenortung für im Innenraum des Kraftfahrzeugs wahrnehmbare Windgeräusche ermöglicht wird. Die Prüfung erfolgt dabei mit sehr hoher Zuverlässigkeit und Messgenauigkeit.

Durch die Verwendung eines als Kugelarray ausgebildeten Mikrofonarrays kann die Zuverlässigkeit der Geräuschquellenortung im Innenraum des Kraftfahrzeugs weiter gesteigert werden. Insbesondere können so Störeffekte im relevanten Frequenzbereich oberhalb von 1000 Hz vermieden werden.

Mit Vorteil ist das Mikrofonarray mit einer optischen Aufnahmevorrichtung gekoppelt. Derart kann ein extrem genauer und zuverlässiger Bezug zwischen Geräuschquellen und der Struktur des Innenraums des Kraftfahrzeugs hergestellt werden.

Mit Vorteil kann eine Verbindungseinrichtung vorgesehen sein, die vorzugsweise mit dem Mikrofonarray verbunden ist, und unter Zuhilfenahme derer das Mikrofonarray im Kraftfahrzeug derart positioniert werden kann, dass eine definierte Position des Mikrofonarrays zu einem oder mehreren Elementen des Innenraum des Kraftfahrzeugs gewährleistet ist. Auf diese Weise können besonders zuverlässige und reproduzierbare Prüfergebnisse erreicht werden.

Mit Vorteil kann die Ausrichtung der Blasdüsen der Blasdüseneinrichtung der Außenkontur des zu prüfenden Kraftfahrzeugs angepasst werden. Diese Anpassung kann fortlaufend während des Prüfvorgangs erfolgen. Derart können auch Kraftfahrzeuge mit sehr unterschiedlichen Außenkonturen - gegebenenfalls auch unmittelbar nacheinander - geprüft werden, ohne dass beispielsweise aufwendige Umstell- oder Umrüstarbeiten notwendig werden. Dabei kann es zweckmäßig sein, dass die Außenkontur des Kraftfahrzeugs unter Zuhilfenahme ein oder mehrerer beispielsweise optischer Sensorvorrichtungen erfasst wird. Zur Anpassung der Ausrichtung der Blasdüsen an die Außenkontur des Kraftfahrzeugs können ein oder mehrere Blasdüsen der Blasdüseneinrichtung schwenkbar, in Höhenrichtung verstellbar, in Längsrichtung verstellbar und/oder in Breitenrichtung verstellbar ausgebildet sein.

Weitere Einzelheiten und Vorteile der Erfindung werden nachfolgend beispielhaft und unter Bezugnahme auf die Zeichnungen erläutert. Es zeigen
- Fig. 1: schematisch eine Frontansicht der Prüfvorrichtung,
- Fig. 2: schematisch einen Schnitt durch ein zu prüfendes Kraftfahrzeug.

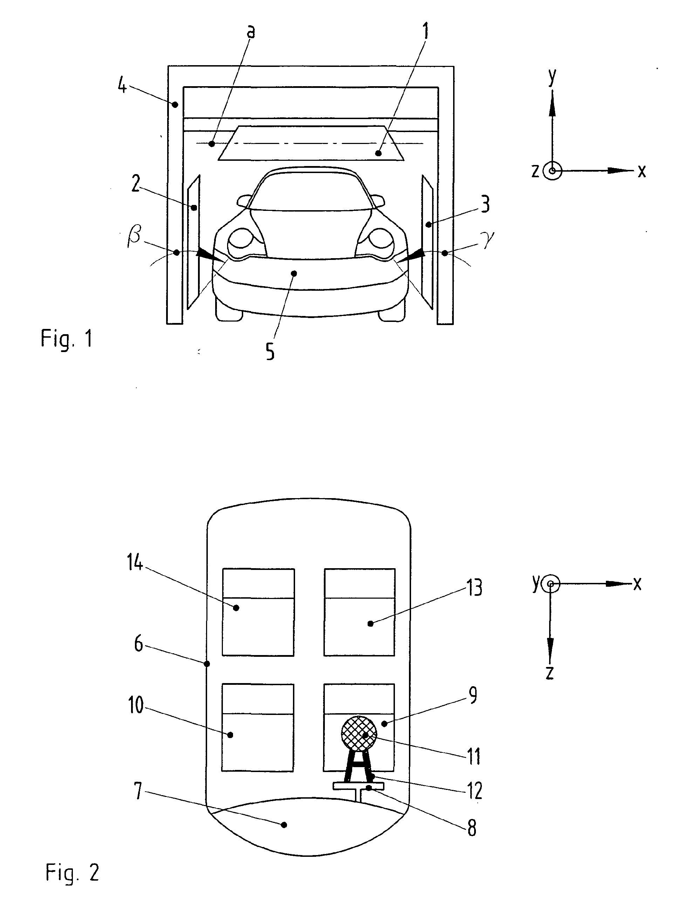

**Fig. 1** zeigt eine Vorrichtung zur Prüfung von Umströmungsgeräuschen eines Kraftfahrzeugs 5, insbesondere eines Personenkraftwagens, wobei die Vorrichtung eine Blasdüseneinrichtung mit mehreren Blasdüsen 1, 2, 3 aufweist. Während des Prüfvorgangs werden das Kraftfahrzeug 5 und die Blasdüseneinrichtung relativ zueinander bewegt. Dabei kann das Kraftfahrzeug 5 und/oder die Blasdüseneinrichtung mit Hilfe mindestens einer nicht näher dargestellten Transporteinrichtung bewegt werden. Zur Bewegung des Kraftfahrzeugs 5 kann die Transporteinrichtung z. B. ein oder mehrere Laufbänder aufweisen. Im gezeigten Beispiel sind die Blasdüsen der Blasdüseneinrichtung mit einer Rahmenvorrichtung 4 verbunden. Zur Bewegung der Blasdüseneinrichtung kann beispielsweise die Rahmenvorrichtung 4 mit Hilfe von Laufrollen bewegt werden.

Umströmungsgeräusche können beispielsweise Luftgeräusche sein, die im Innenraum des Kraftfahrzeugs wahrgenommen werden. Umströmungsgeräusche können z.B. auch aero-akustisch induzierte Geräusche im Innenraum des Kraftfahrzeugs sein.

Im gezeigten Beispiel ist eine Blasdüse 1 vorgesehen, die sich während des Prüfvorgangs im Wesentlichen oberhalb des Kraftfahrzeugs 5 befindet und die zumindest in Höhenrichtung y verstellbar ist. Die Blasdüse 1 kann auch um eine Achse a schwenkbar ausgebildet sein, wobei diese Achse a zumindest im Wesentlichen parallel zur Breitenrichtung x verläuft. Die während des Prüfvorgangs im Wesentlichen seitlich des Kraftfahrzeugs 5 angeordneten Blasdüsen 2 und 3 können in Breitenrichtung x, in Höhenrichtung y und/oder in Längsrichtung z verstellbar ausgebildet sein. Die Blasdüsen 2 und 3 können weiterhin um einen Winkel ß bzw. γ geneigt werden. Dabei kann eine Drehung um eine nicht näher dargestellte, zumindest im Wesentlichen in Längsrichtung z verlaufende Achse erfolgen. Die Blasdüsen 1, 2, 3 können sich zumindest zeitweise auch vor bzw. hinter dem Kraftfahrzeug 5 befinden, wobei die Blasdüsen 2 und 3 auch schwenkbar, insbesondere jeweils um eine in Höhenrichtung y liegende Achse schwenkbar, ausgebildet sein können. Die Blasdüsen 1, 2, 3 können beispielsweise als verstellbare Düsenleisten ausgebildet sein.

Beispielsweise unter Zuhilfenahme einer oder mehrerer der vorangehend beschriebenen Maßnahmen kann die Ausrichtung der Blasdüsen 1, 2, 3 der Blasdüseneinrichtung an die Außenkontur des Kraftfahrzeugs 5 angepasst werden. Durch die Anpassung der Ausrichtung der Blasdüsen 1, 2, 3 an die Fahrzeugkontur können Fahrzeuge mit sehr unterschiedlichen Außenkonturen wenn erforderlich nacheinander, insbesondere auch unmittelbar nacheinander, und im Wechsel mit Hilfe derselben Vorrichtung zur Prüfung von Luftgeräuschen geprüft werden. Zur Anpassung der Ausrichtung der Blasdüsen 1, 2, 3 kann die Außenkontur des Kraftfahrzeugs 5 beispielsweise unter Zuhilfenahme mindestens einer nicht näher dargestellten Sensorvorrichtung erfasst werden. Die mindestens eine Sensorvorrichtung kann beispielsweise eine optische Sensorvorrichtung sein.

**Fig. 2** zeigt schematisch einen Schnitt durch ein Kraftfahrzeug 5 (siehe Fig. 1), wobei die Schnittebene in Breitenrichtung x und Längsrichtung z liegt. Der Innenraum des Kraftfahrzeugs weist eine Begrenzung 6 auf. In Fig. 2 sind nur wenige Elemente des Innenraums des Kraftfahrzeugs 5 angedeutet. So zeigt Fig. 2 schematisch ein Armaturenbrett 7, ein Lenkrad 8, einen Fahrersitz 9, einen Beifahrersitz 10 und Rücksitze 13, 14. Im Innenraum des Kraftfahrzeugs 5 ist zur Messung der Luftgeräusche im Innenraum ein Mikrofonarray 11 angeordnet.

Das Mikrofonarray 11 kann als so genannte akustische 3D-Kamera ausgebildet sein. Wie im gezeigten Beispiel angedeutet, ist das Mikrofonarray 11 vorzugsweise als Kugelarray ausgebildet, wobei mehrere Mikrofone kugelförmig angeordnet sind. Das Mikrofonarray 11 kann mit einer optischen Aufnahmevorrichtung gekoppelt sein. Vorzugsweise wird als optische Aufnahmevorrichtung eine Digitalkamera verwendet. Es ist zweckmäßig, die Mikrofone um die optische Aufnahmevorrichtung herum, z.B. um eine Digitalkamera herum, z.B. kugelförmig anzuordnen. Zur Gewährleistung zuverlässig reproduzierbarer Prüfbedingungen ist das Mikrofonarray 11 im gezeigten Beispiel mit einer Verbindungseinrichtung 12 verbunden. Die Verbindungseinrichtung 12 ist mit einem oder mehreren Elementen des Innenraums des Kraftfahrzeugs 5 gekoppelt. So kann z.B. die Verbindungseinrichtung 12, wie in Fig. 2 angedeutet, mit dem Lenkrad 8 verbunden sein. Mit Hilfe der Verbindungseinrichtung 12 kann die Position des Mikrofonarrays 11 im Innenraum des Kraftfahrzeugs 5 definiert werden, d.h. insbesondere der Abstand und/oder die Ausrichtung des Mikrofonarrays 11 zu einem oder mehreren Elementen des Innenraums und/oder zu der Begrenzung 6 des Innenraums. Die Verbindungseinrichtung 12 kann beispielsweise nach Art eines Stativs ausgebildet sein. Die Verbindungseinrichtung 12 kann z.B. zur Positionierung auf dem Fahrersitz 9, dem Beifahrersitz 10 oder beispielsweise auch zur Positionierung zwischen Fahrersitz 9 und Beifahrersitz 10 ausgebildet sein. Alternativ oder zusätzlich kann die Verbindungseinrichtung 12 zur lösbaren Befestigung an einem Element des Innenraums ausgebildet sein, z.B. zum Einhaken am Lenkrad 8.

Die Messdaten des Mikrofonarrays 11 werden vorzugsweise drahtlos an einen nicht näher dargestellten Prüfstandrechner übermittelt. Der Prüfstandrechner kann eine Steuervorrichtung aufweisen, welche zur Steuerung und/oder Auswertung der Messungen des Mikrofonarrays 11 und/oder zur Steuerung der Transporteinrichtung ausgebildet sein kann. Die Steuervorrichtung kann auch mit der mindestens einen Sensorvorrichtung zur Erfassung der Fahrzeugkontur und mit nicht näher dargestellten Stellvorrichtungen für die Blasdüsen 1, 2, 3 gekoppelt sein. Ggf. kann unter Zuhilfenahme der Steuervorrichtung die Ausrichtung der Blasdüsen 1, 2, 3 der Blasdüseneinrichtung der mit Hilfe der mindestens einen Sensorvorrichtung erfassten Außenkontur des Kraftfahrzeugs 5 angepasst werden. Durch die anpassbare Ausrichtung der Blasdüsen 1, 2, 3 und die Ausbildung der Blasdüsen 1, 2, 3 mit einem hohen Grad an Einstellmöglichkeiten kann die Luftanströmung der Fahrzeugaußenkontur mit geringem Abstand erfolgen. Die Blasdüseneinrichtung kann nicht näher dargestellte Schalldämpfer aufweisen, um Ventilatorgeräusche zu reduzieren. Weiterhin können nicht näher dargestellte Absorber zur Unterdrückung von Reflexionen vorgesehen sein.

Mit Hilfe des Prüfstandrechners können die Laufzeitunterschiede der Schallsignale im Innenraum des Kraftfahrzeugs zu den auf dem Kugelarray angebrachten Mikrofonen ausgewertet werden. So können beispielsweise unter Zuhilfenahme einer so genannten FFT-Analyse, wobei FFT für "Fast Fourier Transformation" steht, akustische Schwachstellen im Innenraum des Kraftfahrzeugs identifiziert werden. Besonders zuverlässige und effiziente Auswerteergebnisse können erzielt werden, wenn zusätzlich zu den akustischen Mikrofonen auch optische Aufnahmevorrichtungen und deren Signale verwendet werden. Vorzugsweise wird eine optische 3D-Kamera, vorzugsweise eine digitale 3D-Kamera verwendet, wobei eine Superposition der akustischen und der optischen Aufnahmen erfolgen kann. Akustische Schwachstellen sind insbesondere Stellen im Innenraum bzw. an der Begrenzung 6 des Innenraums des Kraftfahrzeugs, an denen durch die Luftströmungen verursachte Geräusche auffallen. Dies kann z.B. bei fehlerhaften Dichtungen der Fall sein. Ein Abgleich mit Referenzfahrzeugen und somit eine Gut/Schlecht-Prüfung des Kraftfahrzeugs 5 kann automatisch im Prüfstandrechner erfolgen. Es ist möglich, mit Hilfe des Prüfstandrechners eine Projektion der identifizierten Schallquellen auf eine vorher in den Prüfstandrechner eingepflegte fahrzeugspezifische Innenraumoberfläche durchzuführen. Die Prüfergebnisse können auch graphisch in Form einer Abwicklung der Innenraumoberfläche auf ein zweidimensionales Medium dargestellt werden, wobei Schallquellen beispielsweise durch Färbung dargestellt werden können. Insbesondere bei einer automatischer Auswertung der Prüfergebnisse können anhand der Daten eines Referenzfahrzeugs mit Hilfe einer Ausgabevorrichtung Hinweise z.B. in Textform und/oder in graphischer Form über den Ort der Geräuschentstehung - z.B. Schiebedach, Windschutzscheibe oder Dichtung im Spiegeldreieck, ggf. auch genauer, z.B. " Vorderkante Schiebedach" - ausgegeben werden.

## Patentansprüche

1. Vorrichtung zur Prüfung von Umströmungsgeräuschen eines Kraftfahrzeugs (5), wobei die Vorrichtung eine Blasdüseneinrichtung mit wenigstens einer Blasdüse (1, 2, 3) und eine Transporteinrichtung aufweist, wobei die Blasdüseneinrichtung zur gezielten Beaufschlagung der Außenhaut des Kraftfahrzeugs (5) mit Luftströmungen ausgebildet ist, und wobei die Transporteinrichtung derart ausgebildet ist, dass die Blasdüseneinrichtung und das Kraftfahrzeug (5) relativ zueinander bewegt werden können, **dadurch gekennzeichnet, dass** ein Mikrofonarray (11) vorgesehen ist, welches zur Anordnung im Innenraum des Kraftfahrzeugs (5) und zur Messung der Umströmungsgeräusche im Innenraum des Kraftfahrzeugs (5) ausgebildet ist.

2. Vorrichtung nach Patentanspruch 1, wobei das Mikrofonarray (11) als Kugelarray ausgebildet ist.

3. Vorrichtung nach Patentanspruch 1 oder 2, wobei das Mikrofonarray (11) mit mindestens einer optischen Aufnahmevorrichtung gekoppelt ist.

4. Vorrichtung nach Patentanspruch 3, wobei die Mikrofone des Mikrofonarrays (11) um die optische Aufnahmevorrichtung herum angeordnet sind.

5. Vorrichtung nach einem der vorangehenden Patentansprüche, wobei eine Verbindungseinrichtung (12) vorgesehen ist, mit Hilfe derer das Mikrofonarray (11) in einer Position angeordnet werden kann, welche relativ zu einem oder mehreren Elementen des Innenraum des Kraftfahrzeugs (5) definiert ist.

6. Vorrichtung nach einem der vorangehenden Patentansprüche, wobei eine Steuervorrichtung vorgesehen ist, welche zur Steuerung der Bewegung der Transporteinrichtung und/oder zur Steuerung und/oder Auswertung der Messungen des Mikrofonarrays (11) ausgebildet ist.

7. Vorrichtung nach einem der vorangehenden Patentansprüche, wobei mindestens eine Blasdüse (1) zumindest in Höhenrichtung (y) verstellbar und zumindest um eine sich in Breitenrichtung (x) erstreckende Achse (a) schwenkbar ausgebildet ist.

8. Vorrichtung nach einem der vorangehenden Patentansprüche, wobei mindestens eine Blasdüse (2, 3) zumindest in Breitenrichtung (x) verstellbar und zumindest um einen Winkel (ß, γ) neigbar ausgebildet ist.

9. Vorrichtung nach einem der vorangehenden Patentansprüche, wobei das Mikrofonarray (11) drahtlos mit einem Prüfstandrechner gekoppelt ist.

10. Verfahren zur Prüfung von Umströmungsgeräuschen eines Kraftfahrzeugs (5), wobei eine Blasdüseneinrichtung und das Kraftfahrzeug (5) relativ zueinander bewegt werden, wobei die Außenhaut des Kraftfahrzeugs (5) unter Zuhilfenahme der Blasdüseneinrichtung gezielt mit Luftströmungen beaufschlagt wird, **dadurch gekennzeichnet, dass** die durch die Luftströmungen verursachten Umströmungsgeräusche im Innenraum des Kraftfahrzeugs (5) unter Verwendung eines Mikrofonarrays (11) gemessen werden.

11. Verfahren nach Patentanspruch 10, wobei ein als Kugelarray ausgebildetes Mikrofonarray (11) mit einer optischen Aufnahmevorrichtung verwendet wird.

12. Verfahren nach Patentanspruch 10 oder 11, wobei das Mikrofonarray (11) vor der Messung der Umströmungsgeräusche an einer definierten Position im Innenraum des Kraftfahrzeugs angeordnet wird.

13. Verfahren nach einem der Patentansprüche 10 bis 12, wobei die Messdaten des Mikrofonarrays (11) drahtlos an einen Prüfstandrechner übermittelt werden.

14. Verfahren nach einem der Patentansprüche 10 bis 13, wobei die Laufzeitunterschiede der von den einzelnen Mikrofonen des Mikrofonarrays (11) aufgenommenen Schallsignale ausgewertet werden und zur Identifikation von Schallquellen auf einer fahrzeugspezifischen Innenraumoberfläche verwendet werden.

15. Verfahren nach einem der Patentansprüche 10 bis 14, wobei die Ausrichtung der Blasdüsen (1, 2, 3) der Blasdüseneinrichtung der Außenkontur des Kraftfahrzeugs (5) angepasst wird.

16. Verfahren nach Patentanspruch 15, wobei zur Ausrichtung der Blasdüsen (1, 2, 3) die Außenkontur des Kraftfahrzeugs (5) unter Zuhilfenahme ein oder mehrerer optischer Sensorvorrichtungen erfasst wird.
